# EUROPÄISCHE PATENTSCHRIFT

(11) **EP 1 736 743 B1**
(45) Veröffentlichungstag und Bekanntmachung des Hinweises auf die Patenterteilung: **14.08.2019**
(21) Anmeldenummer: 06112865.8
(22) Anmeldetag: 21.04.2006
(51) Int. Cl.: G01F 23/36

(54) **Füllstandsensor**
Filling level sensor
Capteur de niveau de remplissage

(30) Priorität: 24.06.2005 DE 102005029788
(43) Veröffentlichungstag der Anmeldung: 27.12.2006
(73) Patentinhaber: CPT Group GmbH, 30165 Hannover (DE)
(72) Erfinder: Benner, Hans-Günter, 65830, Kriftel (DE); Eck, Karl, 60318, Frankfurt/Main (DE); Pauer, Bernd, 65817, Eppstein (DE); Penzar, Zlatko, 60529, Frankfurt/ Main (DE); Schröter, Knut, 61440, Oberursel (DE)

(56) Entgegenhaltungen:
- WO-A-96/41136
- DE-A1- 2 121 823
- DE-A1- 3 926 359
- DE-A1- 10 229 795
- DE-U1- 29 700 625
- GB-A- 597 974
- JP-A- 2000 219 162
- JP-A- 2005 103 613
- US-A- 3 403 376
- US-A- 3 913 400
- US-A- 5 357 815

## Beschreibung

Gegenstand der Erfindung ist ein Füllstandsensor für einen Kraftstofftank, bestehend aus einer keramischen Trägerplatte mit einem darauf angeordneten Widerstandsnetzwerk und einer Kontaktstruktur zur Ermittlung eines elektrischen Signals für den Füllstand und einem mit der Trägerplatte verbundenen Deckel, wobei Deckel und Trägerplatte ein Gehäuse bilden.

Das Gehäuse derartiger Sensoren dient zur Aufnahme diverser Bauteile des Sensors, um sie gegen aggressive Medien zu schützen. Bei einem Einsatz des Sensors in einem Kraftstofftank muss das Gehäuse in erster Linie kraftstoffbeständig und flüssigkeitsdicht sein. Dazu ist es bekannt, einen dünnwandigen Deckel aus Metall zu verwenden, der neben der flüssigkeitsdichten Ausbildung des Gehäuses gleichzeitig einen ausreichenden Schutz gegen die im Betrieb des Kraftstoffbehälters auftretenden Drücke im Bereich von 70-100 mbar formbeständig ist. In dem Dokument DE 29700625 U1 ist ein Füllstandsgeber für den Tank eines Kraftfahrzeuges beschrieben, bei welchem ein Widerstandsnetzwerk an einem feststehenden Träger angeordnet ist, wobei am Widerstandsnetzwerk entsprechend der Position eines dem Niveau einer Flüssigkeit folgenden Schwimmers ein Ausgangssignal abnehmbar ist.

Sofern der Füllstandsensor nicht im fertigen Kraftstoffbehälter, sondern bereits zuvor in einen den späteren Kraftstoffbehälter bildenden Kunststoffvorformling eingebracht wird, kann der Füllstandsensor während des Herstellprozesses des Kraftstoffbehälters wesentlich höheren Drücken im Bereich von 8 bar bis 12 bar ausgesetzt werden. Infolge dieser hohen Drücke kommt es zu Verformungen des Deckels und der Trägerplatte, die wiederum zum Bruch der Trägerplatte führen, wodurch die Dichtheit des Gehäuses nicht mehr gewährleistet ist.

Der Erfindung liegt daher die Aufgabe zugrunde, einen Füllstandsensor zu schaffen, der neben der Beständigkeit gegenüber den Einflüssen seines Einsatzortes auch gegenüber einer Vormontage mit erschwerten Umwelteinflüssen beständig ist.

Erfindungsgemäß wird die Aufgabe dadurch gelöst, dass der Deckel mindestens eine Sicke aufweist, und dass die Sicken zwischen einer Seitenwand und dem Rand des Deckels ausgebildet sind.

Durch die Anordnung von Sicken im Deckel wird in besonders einfacher Weise eine mechanische Verstärkung des Gehäuses und somit eine größere Beständigkeit des Deckels gegen Verformungen erreicht, die wiederum dazu führt, dass die Trägerplatte fester gelagert wird, wodurch sie auch bei größeren auf das Gehäuse einwirkenden Drücken weniger verformt und somit nicht beschädigt wird und die Dichtheit des Gehäuses erhalten bleibt. Ein zusätzlicher Materialeinsatz zur Verstärkung des Gehäuses ist dabei nicht notwendig. Da die Verstärkung lediglich auf den Deckel bezogen ist, können restlichen Bestandteile des Füllstandsgebers unverändert weiter benutzt werden. Die Verstärkung des Deckels bewirkt jedoch nicht nur einen Schutz bei großen Drücken, sondern auch bei gegenüber Normaldruck sehr kleinen Drücken.

Neben der nachträglichen Ausbildung der Sicken in dem Gehäuse können diese aber auch im selben Arbeitsschritt mit der Gehäuseherstellung erzeugt werden. Diese Ausgestaltung hat den Vorteil, dass kein zusätzlicher Bearbeitungsschritt notwendig ist. Ermöglicht wird dies durch ein entsprechend gestaltetes Formwerkzeug für das Gehäuse.

Eine besonders große mechanische Steifigkeit wird dadurch erreicht, dass alle Flächen des Deckels mit Sicken versehen sind. Es hat sich jedoch gezeigt, dass die Verstärkung einzelner Bereiche des Deckels bereits ausreichend ist. Eine Verstärkung des gesamten Gehäuses ist daher nicht notwendig, wodurch der Aufwand für die Verstärkung des Gehäuses gering ist.

Als besonders stabil haben sich nichterfindungsgemäße Beispiele von Deckel herausgestellt, die lediglich an der Deckeloberseite Sicken aufweisen. Da die Deckeloberseite die größte Fläche des Deckels ist, wird mit der Anordnung von Sicken an dieser Fläche bereits eine gute Verstärkung des Gehäuses erreicht.

Die Anzahl der Sicken an der Gehäuseoberseite lässt sich gering halten, wenn die Sicken parallel zur längsten Ausdehnung des Gehäuses ausgerichtet sind.

Das Gehäuse des Füllstandsensors erfordert keinen größeren Bauraum, wenn die Sicken in Richtung des Gehäuseinneren gewölbt sind. Eventuell notwendige Anpassungen der Aufnahme für das Gehäuse sind daher nicht notwendig.

Eine erfindungsgemäße Ausgestaltung besteht darin, die Sicken zwischen einer Seitenwand des Deckels und dem Randbereich anzuordnen. Mit dieser Ausbildung wird der Seitenwandbereich des Gehäuses verstärkt, so dass ein Durchbiegen des Gehäuses entlang der Seitenwände vermieden wird. Die Anzahl der vorzusehenden Sicken hängt von den auftretenden Belastungen ab.

Ein zuverlässiger Schutz des Gehäuses gegen besonders starke Belastungen wird dadurch erreicht, dass die Anordnung von Sicken zwischen den Seitenwänden und dem Randbereich mit der Anordnung von Sicken in der Deckeloberseite kombiniert wird.

An zwei Ausführungsbeispielen wird die Erfindung näher erläutert. Dabei zeigen:
- Figur 1:: einen unverstärkten Füllstandssensor in einem Kraftstoffbehälter,
- Figur 2:: das Gehäuse eines nichterfindungsgemäßen Füllstandsensors nach Figur 1 in einer perspektivischen Ansicht und
- Figur 3:: eine erfindungsgemäße Ausführungsform des Deckels.

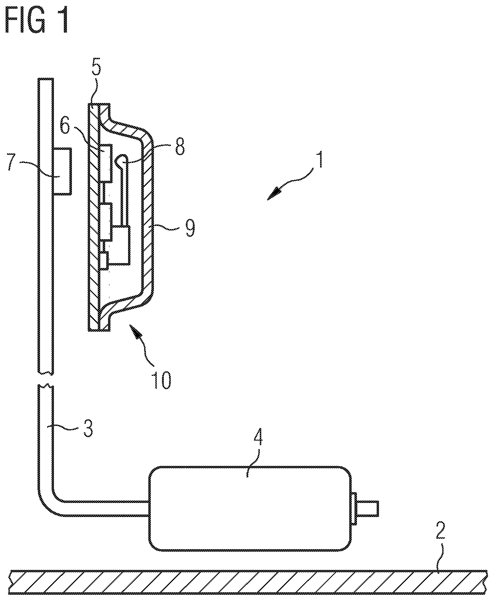

Der in Figur 1 dargestellte Füllstandsensor 1 ist in einem Kraftstoffbehälter 2 angeordnet. Der Füllstandsensor 1 besteht aus einem schwenkbar gelagerten Hebelarm 3, an dessen einen Ende ein Schwimmer 4 gelagert ist. Der Füllstandsensor 1 besitzt weiterhin eine keramische Trägerplatte 5, auf der ein elektrisches Widerstandsnetzwerk 6 aufgebracht ist. Eine von dem Hebelarm 3 mittels eines Magneten 7 auslenkbare Kontaktstruktur 8 erzeugt ein in Abhängigkeit von der Hebelarmstellung elektrisches Signal für den Füllstand. Die Trägerplatte 5 ist mit einem Deckel 9 unter Bildung eines Gehäuses 10 derart verbunden, dass das Widerstandsnetzwerk 6 und die Kontaktstruktur 8 gegenüber der Umgebung abgedichtet sind.

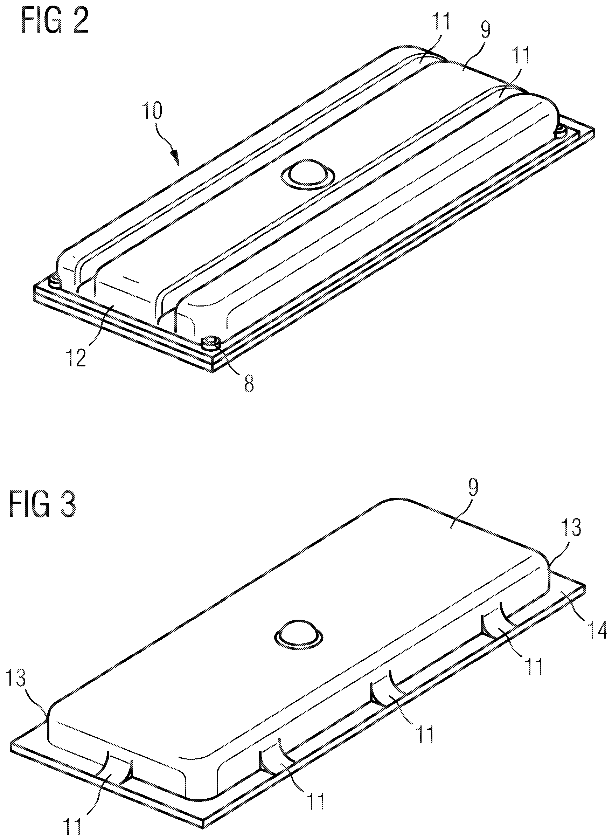

Figur 2 zeigt das aus Deckel 9 und Trägerplatte 5 bestehende Gehäuse 10 des Füllstandsensors. Parallel zur größten Längsausdehnung des Gehäuses 10 weist der Deckel 9 zwei Sicken 11 zur mechanischen Verstärkung auf. Die Sicken 9 sind auf der Deckeloberseite 12 angeordnet. Die Sicken 11 sind dabei in Richtung des Gehäuseinneren gewölbt, so dass der Deckel 9 keinen größeren Bauraum als ein unverstärkter Deckel benötigt.
Der in Figur 3 dargestellte Deckel 9 besitzt ebenfalls Sicken 11 zur Erhöhung der mechanischen Steife. Die Sicken 11 sind zwischen den Seitenflächen 13 und dem Rand 14 des Deckels angeordnet.

## Patentansprüche

1. Füllstandsgeber für einen Kraftstofftank, bestehend aus einer keramischen Trägerplatte mit einem darauf angeordneten Widerstandsnetzwerk und einer Kontaktstruktur zur Ermittlung eines elektrischen Signals für den Füllstand und einem mit der Trägerplatte verbundenen topfförmigen Deckel mit einer Deckeloberseite, mit einem nach außen weisenden, umlaufenden Rand und daran angrenzenden Seitenflächen, wobei Deckel und Trägerplatte ein Gehäuse bilden, indem der Rand des Deckels auf der Trägerplatte aufliegt, **dadurch gekennzeichnet, dass** der Deckel (9) mindestens eine Sicke (11) aufweist, und dass die Sicken (11) zwischen einer Seitenwand (13) und dem Rand (14) des Deckels (9) ausgebildet sind.

## Claims

1. Filling level sensor for a fuel tank, comprising a ceramic mounting plate with a resistance network arranged thereon and a contact structure for the detection of an electrical filling level signal, and a cup-shaped cover connected to the mounting plate, having a cover top side, having an encircling edge which faces outwards and side faces which adjoin said edge, the cover and the mounting plate forming a housing by way of the edge of the cover resting on the mounting plate, **characterized in that** the cover (9) has at least one bead (11), and **in that** the beads (11) are formed between a side wall (13) and the edge (14) of the cover (9) .

## Revendications

1. Capteur de niveau de remplissage pour un réservoir de carburant, constitué d'une plaque de support en céramique avec un réseau de résistances disposé sur celle-ci et une structure de contact pour déterminer un signal électrique pour le niveau de remplissage et un couvercle en forme de pot raccordé à la plaque de support avec un côté supérieur de couvercle, avec un bord périphérique orienté vers l'extérieur et des surfaces latérales adjacentes à celui-ci, le couvercle et la plaque de support formant un boîtier, par le fait que le bord du couvercle repose sur la plaque de support, **caractérisé en ce que** le couvercle (9) présente au moins une moulure (11) et **en ce que** les moulures (11) sont réalisées entre une paroi latérale (13) et le bord (14) du couvercle (9).
